# EUROPÄISCHE PATENTANMELDUNG

(11) **EP 3 907 420 A1**
(43) Veröffentlichungstag der Anmeldung: **10.11.2021**
(21) Anmeldenummer: 21171590.9
(22) Anmeldetag: 30.04.2021
(51) Int. Cl.: F16H 1/12, E05F 15/603, F16H 1/20

(54) **PLANSPIRALGETRIEBE SOWIE TORANTRIEBSKOMPONENTE UND TORANTRIEB MIT EINEM SOLCHEN GETRIEBE**

(30) Priorität: 07.05.2020 DE 202020102568 U
(71) Anmelder: Marantec Antriebs- und Steuerungstechnik GmbH & Co. KG., 33428 Marienfeld (DE)
(72) Erfinder: HÖRMANN, Michael, 33790 Halle / Westfalen (DE)
(74) Vertreter: Laufhütte, Dieter

(57) **Zusammenfassung**

Die Erfindung betrifft ein Planspiralgetriebe, insbesondere zur Verwendung in einer Toranlage, umfassend: ein Zahnrad, insbesondere eine Planspirale, mit einer flächigen Seite, auf der eine Spiralverzahnung mit mindestens einem Zahn angeordnet ist, der einen spiralförmigen Zahnverlauf besitzt, und ein Zylinderrad, insbesondere ein Torusrad, das an seiner Mantelfläche eine Außenverzahnung aufweist, wobei die Spiralverzahnung des Zahnrads mit der Außenverzahnung des Zylinderrads in kämmendem Eingriff steht, wobei das Zahnrad mindestens einen Zusatzverzahnungsabschnitt aufweist, der radial zu einer Drehachse des Zahnrads beabstandet ist und zum Angreifen einer Antriebsverzahnung dient.

## Beschreibung

Die vorliegende Erfindung betrifft ein Planspiralgetriebe sowie eine Torantriebskomponente und einen Torantrieb mit einem solchen Getriebe.

Planspiralgetriebe, die auch Spiralplanschneckengetriebe oder Planschneckengetriebe bezeichnet werden, sind grundsätzlich aus dem Stand der Technik bekannt.

So zeigt bspw. die EP 1 402 200 B1 ein Planspiralgetriebe, bei dem die beiden miteinander kämmenden Verzahnungen spezifisch ausgeformt sind.

Insbesondere in Kombination mit einem Torantrieb entstehen synergetische Vorteile bei Verwendung eines Planspiralgetriebes. So ist bei den bisher in der Regel verwendeten Schneckengetrieben immer auch eine separate Bremseinheit an dem Torantrieb vorzusehen, da ein Torantrieb immer auch eine sogenannte "Absturzsicherung" erfordert. Anders ist dies hingegen bei Verwendung eines Planspiralgetriebes, da dieses allein durch seine Selbsthemmung in federausgeglichenen Toranlagen als "Absturzsicherung" dient. Weiter kommt hinzu, dass -anders als bei den bisherigen Torantrieben- bei Planspiralgetrieben die "Absturzsicherung" im Auslösefall nicht zerstört wird.

Der Begriff Torantrieb, der im folgenden verwendet wird, ist im vorliegenden Fall sehr allgemein zu verstehen. Es geht ganz allgemein um einen Verschluss für eine Gebäudeöffnung. Die folgend erwähnten Torantriebe betreffen also Antriebe für Industrietore, Schiebetore, Sektionaltore, Schnelllauftore, Garagentore, wie beispielsweise Tiefgaragentore, und ähnliche Verschlussvorrichtungen.

Weiterhin ist von Vorteil, dass ein Planspiralgetriebe hohe Übersetzungsverhältnisse (bis 1:200) ermöglicht, so dass das Getriebe selbst deutlich kleiner als die herkömmlichen Getriebe ausgelegt werden kann.

Weiterhin können kleinere Motoren aufgrund des höheren Übersetzungsverhältnisses verbaut werden und auch die Motorelektronik kleiner und kompakter ausgeführt werden, da der Motor durch eine effizientere Ansteuerung selbst weniger Energie verbraucht. Hierdurch ist es möglich, einen sehr viel kleineren, kompakten, nicht weit ausladenden Antrieb zu erhalten, der einfacher, leichter und flexibler montiert werden kann und trotzdem identische Leistungsdaten aufweist.

Dennoch gibt es das kontinuierliche Bestreben, die Motoreinheit eines Torantriebs weiter zu verkleinern, um einen möglichst universell einsetzbaren Antrieb zu schaffen. Auch ist es wünschenswert, einen Antrieb zu schaffen, der ein breites Übersetzungsverhältnis abdeckt und besonders ausfallsicher ist.

Die oben aufgeführten Probleme werden mit Hilfe eines Planspiralgetriebes überwunden, welches sämtliche Merkmale des Anspruchs 1 aufweist.

Demnach ist vorgesehen, dass das erfindungsgemäße Planspiralgetriebe, insbesondere zur Verwendung in einer Toranlage, ein Zahnrad, insbesondere eine Planspirale, mit einer flächigen Seite, auf der eine Spiralverzahnung mit mindestens einem Zahn angeordnet ist, der einen spiralförmigen Zahnverlauf besitzt, und ein Zylinderrad umfasst, insbesondere ein Torusrad, das an seiner Mantelfläche eine Außenverzahnung aufweist, wobei die Spiralverzahnung des Zahnrads mit der Außenverzahnung des Zylinderrads in kämmenden Eingriff steht. Die Erfindung ist dadurch gekennzeichnet, dass das Zahnrad mindestens einen Zusatzverzahnungsabschnitt aufweist, der radial zu einer Drehachse des Zahnrads beabstandet ist und zum Angreifen einer Antriebsverzahnung dient.

Nach dem Stand der Technik ist typischerweise die Ausgangswelle eines Antriebs abtriebsseitig mit der Planspirale versehen oder mit dieser einfach drehfest verbunden. Die Ausgangswelle des Antriebs rotiert dabei in der Drehachse der Planspirale.

Um nun die von einer Ausgangswelle abgehenden Kraft eines Antriebs verbessert einzusetzen, sieht die vorliegende Erfindung einen Zusatzverzahnungsabschnitt vor, der zum Angreifen einer Antriebsverzahnung dient. Die Ausgangswelle eines Antriebs rotiert demnach nun nicht mehr in der Drehachse der Planspirale, sondern in einer dazu verschiedenen Achse. Da der Zusatzverzahnungsabschnitt zudem von der Drehachse beabstandet ist, wirkt ein günstiges Übersetzungsverhältnis auf das Getriebe, so dass die Planspirale mit größerer Kraft angetrieben wird.

Dabei kann vorgesehen sein, dass der Zusatzverzahnungsabschnitt radial mit gleichem Abstand um die Drehachse der Planspirale herum angeordnet ist.

Nach einer Modifikation der vorliegenden Erfindung kann vorgesehen sein, dass der Zusatzverzahnungsabschnitt eine Zylindermantelform aufweist, deren Achse identisch zur Drehachse des Zahnrads ist und die an ihrer Innen- und/oder Außenseite eine Verzahnung zum Angreifen einer Antriebsverzahnung aufweist.

Dabei kann der Zusatzverzahnungsabschnitt an einer Seite des Zahnrads angeordnet sein, die zu der flächigen Seite, die die Spiralverzahnung aufweist, gegenüberliegt und/oder von dieser abgeht.

Nach einer weiteren Fortbildung der Erfindung kann vorgesehen sein, dass der Zusatzverzahnungsabschnitt einen radialen Abstand von der Drehachse des Zahnrads aufweist, der größer als der maximale radiale Abstand der Spiralverzahnung von der Drehachse ist. Demnach kann also der Zusatzverzahnungsabschnitt die Spiralverzahnung umschließen oder einfassen, so dass dieser auch einfach im Fortgang der Spiralebene angeordnet sein kann, wobei bspw. die Zahnnuten eines solchen Zusatzverzahnungsabschnitts radial zur Drehachse des Zahnrads ausgerichtet sind.

Weiter kann nach der Erfindung vorgesehen sein, dass der spiralförmige Zahnverlauf oder die spiralförmigen Zahnverläufe der Spiralverzahnung dem Verlauf einer Spirale entspricht/ entsprechen, deren Ursprung auf der Drehachse des Zahnrads liegt, wobei vorzugsweise der spiralförmige Zahnverlauf einer Archimedischen Spirale entspricht.

Nach der Erfindung kann ebenfalls vorgesehen sein, dass der Zusatzverzahnungsabschnitt an einer die Spiralverzahnung umgebenden, sich radial nach außen erstreckenden Auskragung angeordnet ist, so dass der Zusatzverzahnungsabschnitt senkrecht zu der Drehachse steht oder mit der Lotrechten auf die Drehachse einen spitzen Winkel einschließt.

Nach einer optionalen Modifikation der Erfindung kann vorgesehen sein, dass der Zusatzverzahnungsabschnitt an einer Seite des Zahnrads angeordnet ist, die zu der flächigen Seite, die die Spiralverzahnung aufweist, zugewandt ist.

Nach der Erfindung kann ebenfalls umfasst sein, dass mehrere Zusatzverzahnungsabschnitte vorgesehen sind, von denen jeder eine Verzahnung zum Angreifen einer Antriebsverzahnung aufweist, vorzugsweise wobei die mehreren Zusatzverzahnungsabschnitte unterschiedliche Übersetzungen im Planspiralgetriebe erzeugen.

Durch das Vorsehen mehrerer Zusatzverzahnungsabschnitte zum Angreifen einer Antriebsverzahnung können auch mehrere voneinander unabhängige Antriebe zum Antreiben des Getriebes verwendet werden, so dass hinsichtlich des Antriebs eine Redundanz erzeugt wird, die die Ausfallsicherheit eines derart ausgestalteten Getriebeantriebs signifikant verringert. Weiter erlauben die unterschiedlichen Übersetzungen das gezielte Anordnen einer Antriebsverzahnung für einen spezifischen Anwendungsfall, so dass eine universellere Einsetzbarkeit erreicht wird.

Nach der Erfindung kann ferner vorgesehen sein, dass das Zahnrad dazu ausgelegt ist, lediglich über seinen mindestens einen Zusatzverzahnungsabschnitt angetrieben zu werden. Es ist demnach nicht mehr erforderlich, dass -wie vormals üblich- das Zahnrad in Form einer Planspirale drehfest mit einer Ausgangswelle eines Antriebs verbunden ist. Die Wellen eines oder mehrerer Antriebsmotoren sind liegen demnach auf zu der Drehachse des Zahnrads verschiedenen Achsen.

Die Erfindung umfasst darüber hinaus auch eine Torantriebskomponente, insbesondere zum Antrieb eines Garagentors, die ein Planspiralgetriebe nach einer der vorhergehenden Varianten, und ein das Planspiralgetriebe umgebendes Gehäuse umfasst, das über mehrere Öffnungen zum Einführen einer Antriebsverzahnung eines Antriebsmotors für ein Zusammenwirken mit einer oder mehreren Verzahnungen des mindestens einen Zusatzverzahnungsabschnitts verfügt.

Das Gehäuse besitzt demnach mehrere Öffnungen zum Durchführen von jeweiligen Antriebswellen, die mit einem zugehörigen Zusatzverzahnungsabschnitt mittels einer entsprechenden Antriebsverzahnung in Eingriff bringbar sind.

So kann ganz nach den jeweils erforderlichen Anforderungen der Torantriebskomponente entschieden werden, durch welche der mehreren Öffnungen das Planspiralgetriebe anzutreiben ist. Ist bspw. ein besonders schweres Tor zu betätigen, können mehrere Öffnungen mit Antriebswellen bestückt werden, so dass die mehreren Wellen eine zusammengenommene höhere Leistung entfalten. Zudem ist hierbei von Vorteil, dass dann auch eine Redundanz in Bezug auf einen Ausfalle einer Antriebswelle oder eines damit in Verbindung stehenden Motors gegeben ist. Wirkt dann bspw. nur der verbleibende der beiden Motoren, kann das Tor zwar langsamer aber immer noch betätigt werden, so dass die Funktionalität beibehalten ist.

Dabei kann auch vorgesehen sein, dass die mehreren Öffnungen zu verschiedenen Verzahnungen des Zusatzverzahnungsabschnitts und/oder verschiedenen Zusatzverzahnungsabschnitten führen, wobei vorzugsweise die Öffnungen Bestandteil einer Antriebsmotoraufnahme in dem Gehäuse sind.

So können bei Bedarf die erforderlichen Motoren mit ihren Ausgangswellen und Antriebsverzahnungen angebaut werden. Ein weiterer Vorteil ist die Montage des Motors an mehreren verschiedenen Positionen, so dass je nach Tortyp und Ausprägung der zur Verfügung stehende Platz optimal genutzt werden kann.

Weiterhin kann durch die Wahl des Motoranschlusses, also durch die Wahl aus den mehreren Öffnung des Getriebes, die Getriebeübersetzung beeinflusst werden, da alle Einbauorte unterschiedliche Zusatzverzahnungsabschnitte und demnach unterschiedliche Übersetzungen aufweisen können.

Die Erfindung umfasst zudem auch einen Torantrieb, der ein Planspiralgetriebe nach einer der vorhergehenden Varianten oder eine Torantriebskomponente nach einer der vorhergehenden Varianten und mindestens einen Antriebsmotor mit einer Antriebsverzahnung umfasst, die mit einer Verzahnung des mindestens einen Zusatzverzahnungsabschnitts kämmt, vorzugsweise indem eine die Antriebsverzahnung antreibende Welle des Antriebsmotors durch eine Öffnung in einem das Planspiralgetriebe umgebenden Gehäuse durchgeführt ist.

Demnach kann nach einer Fortbildung der Erfindung vorgesehen sein, dass mehrere Antriebsmotoren zum Antreiben des Planspiralgetriebes vorgesehen sind, von denen jeder vorzugsweise mit einer anderen Verzahnung des mindestens einen Zusatzverzahnungsabschnitts und/oder mit einem separaten Zusatzverzahnungsabschnitt zusammenwirkt.

Weiter umfasst die Erfindung auch die Verwendung eines Planspiralgetriebes in einem Torantrieb, wobei das Planspiralgetriebe ein Zahnrad, insbesondere eine Planspirale, das eine Verzahnung mit mindestens einem Zahn aufweist, der einen spiralförmigen Zahnverlauf besitzt, und ein Zylinderrad umfasst, insbesondere ein Torusrad, das an seiner Mantelfläche eine Außenverzahnung aufweist, wobei das Zahnrad mit dem Zylinderrad in kämmenden Eingriff steht.

Dabei kann weiter vorgesehen sein, dass wobei das Planspiralgetriebe nach einer der vorstehenden Varianten fortgebildet ist.

Weitere Merkmale, Einzelheiten und Vorteile der Erfindung werden anhand der nachfolgenden Figurenbeschreibung ersichtlich. Dabei zeigen:
- Fig. 1:: eine Perspektivansicht eines Tores mit einem Antrieb, der ein Planspiralgetriebe umfasst,
- Fig. 2:: eine vergrößerte Darstellung des Antriebs aus Fig. 1,
- Fig. 3:: eine Perspektivansicht eines Garagentores mit einem Antrieb, der ein Planspiralgetriebe umfasst,
- Fig. 4:: eine vergrößerte Darstellung des Antriebs aus Fig. 3,
- Fig. 5:: eine vergrößerte Darstellung des Antriebs zum Betätigen eines Tores mit angeflanschten Motor,
- Fig. 6:: eine vergrößerte Darstellung des Antriebs zum Betätigen eines Tores ohne angeflanschten Motor,
- Fig. 7:: eine Schnittdarstellung eines Planspiralgetriebes,
- Fig. 8:: eine motorseitige Schneckenwelle mit einer Planspirale,
- Fig. 9:: ein Torusrad.
- Fig. 10:: eine Perspektivansicht eines Getriebegehäuses mit einem Planspiralgetriebe nach der Erfindung,
- Fig. 11:: eine Perspektivansicht eines Getriebegehäuses mit einem Planspiralgetriebe nach der Erfindung mit angeflanschten Antriebsmotoren,
- Fig. 12:: eine Teilschnittdarstellung der Fig. 11,
- Fig. 13:: eine Querschnittansicht des erfindungsgemäßen Planspiralgetriebes mit angeflanschten Motoren,
- Fig. 14:: eine Seitenansicht des Getriebegehäuses mit einem Planspiralgetriebe nach der Erfindung,
- Fig. 15:: eine Perspektivansicht eines Planspiralrads mit mehreren Zusatzverzahnungsabschnitten,
- Fig. 16:: eine Perspektivansicht eines Garagentorantriebs nach der Erfindung,
- Fig. 17:: eine schematische Draufsicht auf einen exemplarischen Aufbau des Garagentorantriebs nach der Erfindung, und
- Fig. 18:: eine vergrößerte Darstellung des Antriebsabschnitts des Garagentors aus Fig. 17.

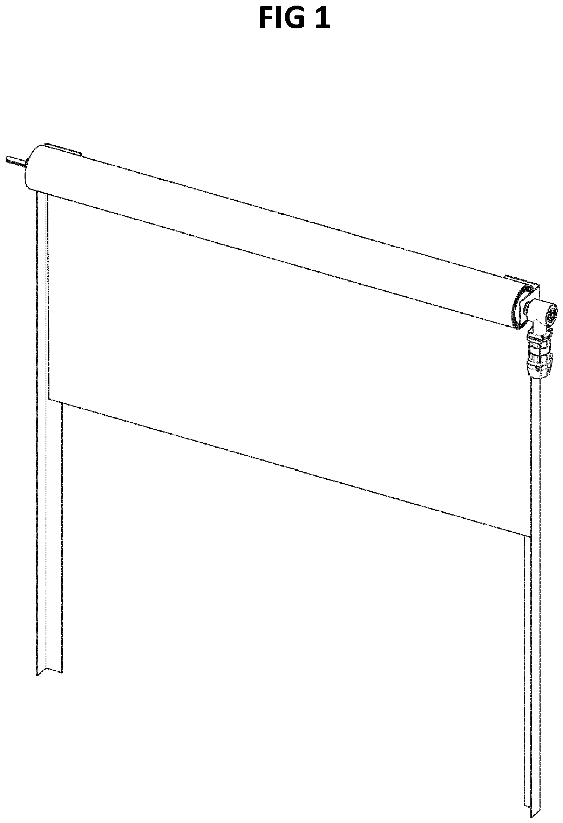

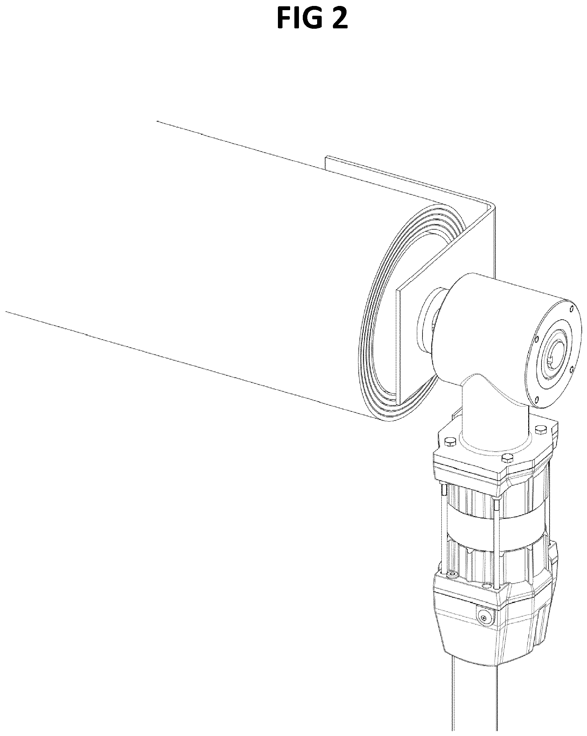

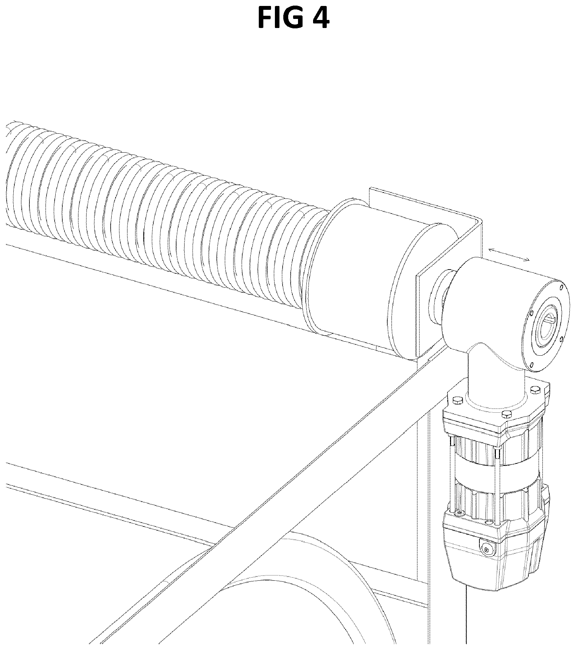

Die Figs. 1 bis 4 zeigen unterschiedliche Anwendungsszenarien einen Antrieb mit Planspiralgetriebe bei Toren. So zeigen die Figs. 1 und 2 ein Rolltor, bzw. ein Schnelllauftor, das mit einem Torantrieb betätigt wird, der über ein später noch ausführlich beschriebenes Planspiralgetriebe verfügt.

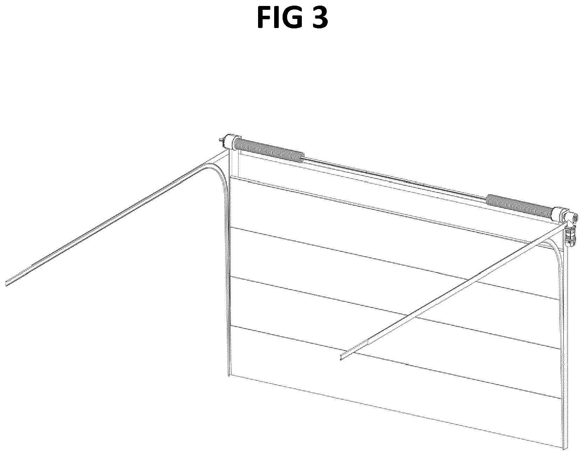

Die Figs. 2 und 3 zeigen einen solchen Antrieb anhand eines Sektionaltores. Dem Fachmann ist klar, dass sich ein solcher Antriebsmotor auch für andere Torarten, wir Schiebetore oder dergleichen in vorteilhafter Weise nutzen lässt. Auch die Anwendung in Garagentorantrieben, insbesondere für einen Heavy-Duty-Einsatz wie bspw. in Tiefgaragen kann mit einem solchen Torantrieb umgesetzt werden.

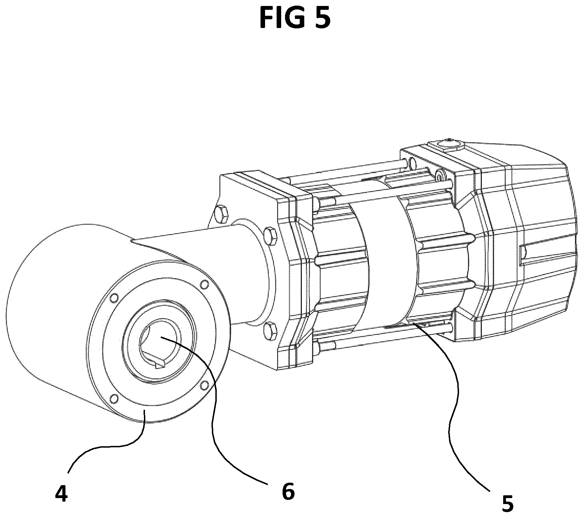

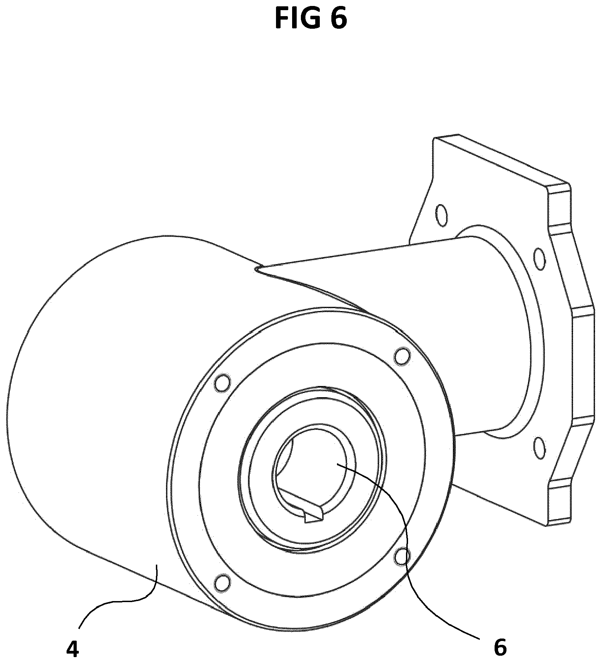

Die Figs. 5 und 6 zeigen einen exemplarischen Aufbau des Planspiralgetriebes 4, angeflanschten Motor 5 (Fig. 5) und ohne angeflanschten Motor (Fig. 6). Die Welle des zu betätigenden Tores wird in die Aufnahme der Torwelle 6 montiert und in dieser drehfest fixiert.

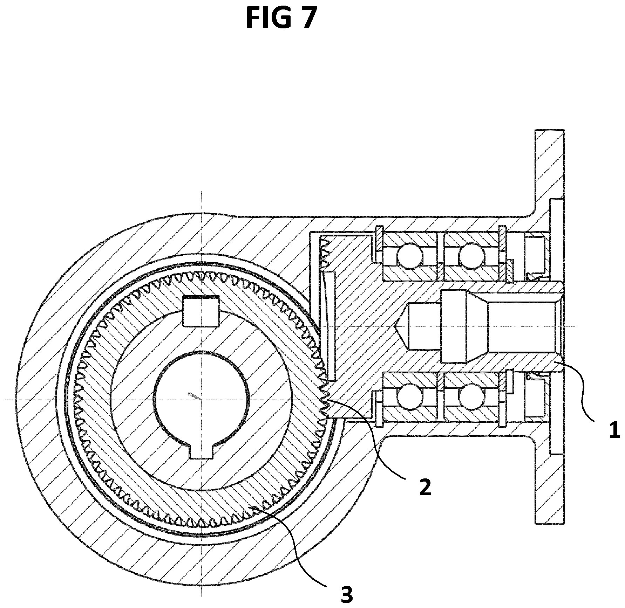

Die Fig. 7 zeigt einen Schnitt des exemplarischen Aufbaus. Hier ist die motorseitige Welle 1 dargestellt, die über die Planspirale 2 in das Torusrad 3 eingreift. Durch die spiralförmige Ausgestaltung wird das Torusrad bei einem Drehen der Planspirale um die Torusraddrehachse rotiert. Dabei ist im Stand der Technik die motorseitige Welle drehfest mit der Planspirale verbunden.

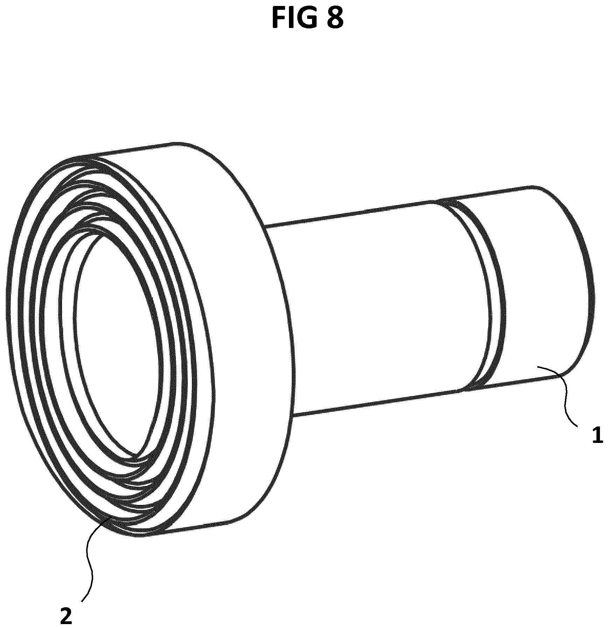

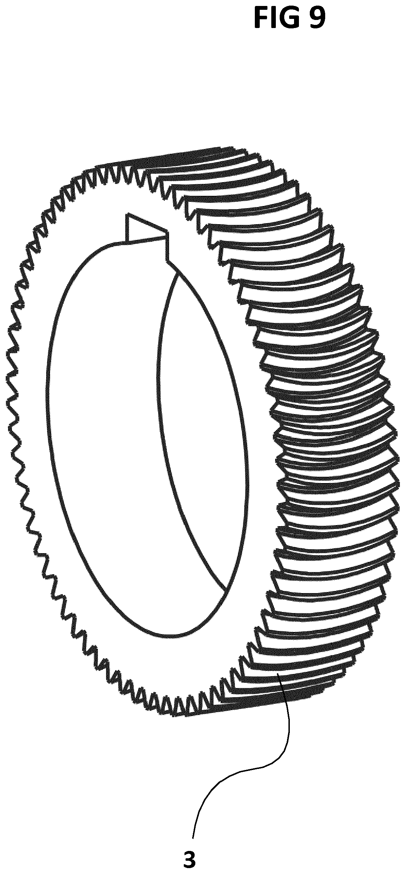

Fig. 8 zeigt die motorseitige Schneckenwelle 1 mit Planspirale 2 und Fig. 9 das Torusrad. Dabei erkennt man, dass die Außenverzahnung des Torusrads ein gebogenes Zahnprofil aufweist, damit es zu einem formschlüssigen Eingriff der Planspirale in die Außenverzahnung kommt.

Die nachfolgenden Figuren zeigen eine Ausführungsform der Erfindung, die auf einer Modifikation des Planspiralgetriebes basiert.

Anders als nach dem Stand der Technik wird die Planspirale nun nicht einfach drehfest mit einer antreibenden Welle verbunden, sondern verfügt über mindestens einen Zusatzverzahnungsabschnitt, an dem eine Außenverzahnung zum Rotieren der Planspirale angreifen kann.

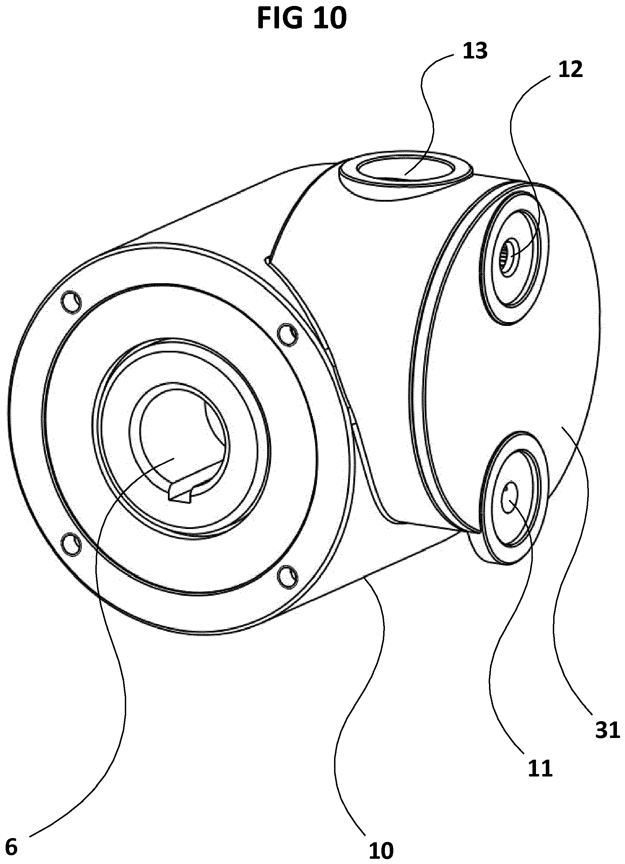

In Fig. 10 wird ein Getriebegehäuse 10 mit der Aufnahme der Torwelle 6 dargestellt. Man erkennt, dass das Gehäuse 10 über mehrere, vorliegend drei Motoraufnahmen 11, 12, 13 verfügt, von denen jede eine Öffnung zum Durchführen einer Antriebswelle aufweist. Dadurch ist es möglich, eine Antriebswelle, bzw. eine Antriebsverzahnung mit einem von dem mindestens einen Zusatzverzahnungsabschnitt in Wirkverbindung zu bringen, um die Planspirale rotieren zu lassen.

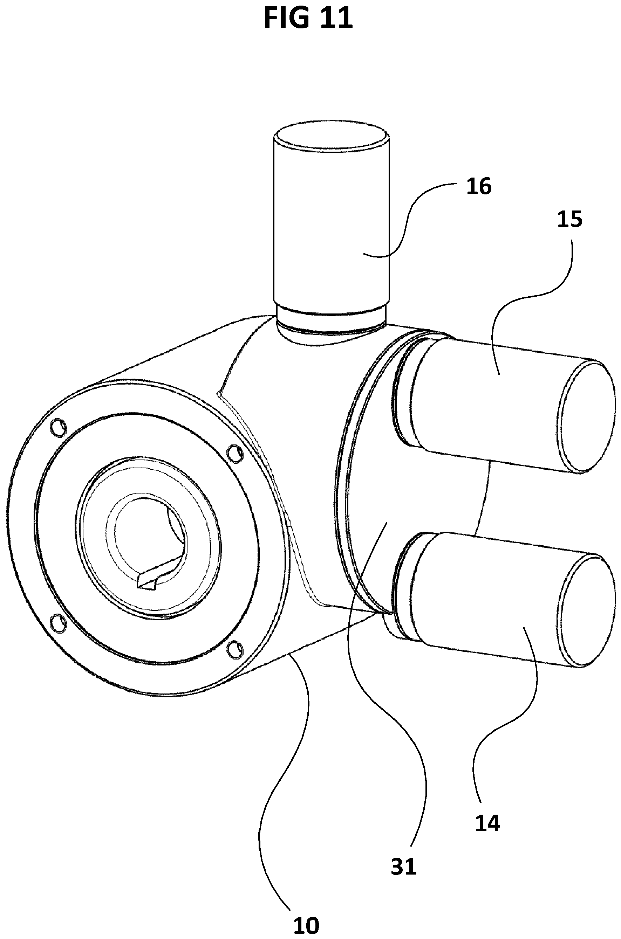

Aus Fig. 11 geht hervor, dass ein bis drei Motoren in die drei Motoraufnahmen montiert werden können, wobei in der Motoraufnahme 11 der Motor 14, in Motoraufnahme 12 der Motor 15, in Motoraufnahme 13 der Motor 16 montiert ist. Für eine Betätigung der Torwelle 6 reicht bereits das Anbringen eines der mehreren Motoren aus, jedoch kann es aus Leistungsgründen oder auch um die Ausfallwahrscheinlichkeit zu verringern, vorn Vorteil sein, mehr als nur einen Motor anzuflanschen. Durch die mehreren Motoraufnahmen kann.

in weiterer Vorteil ist die Montage des Motors an mehreren verschiedenen Positionen, so dass je nach Tortyp und Ausprägung der zur Verfügung stehende Platz optimal genutzt werden kann. Weiterhin kann durch die Wahl des Motoranschlusses die Getriebeübersetzung beeinflusst werden, da alle Einbauorte unterschiedliche Übersetzungen haben können.

Letztendlich können bei höherem Leistungsbedarf mehrere Motoren in ein Getriebe montiert werden. In diesem Fall ist auch eine Redundanz vorhanden, so dass bei dem Ausfall eines Motors das Tor mit verminderter Geschwindigkeit weiterhin motorisch geöffnet und geschlossen werden kann. Die Montage kann in die Montageplätze 11 und 12 realisiert werden. Alternativ können bei einer angepassten Montageplatte 31 zwei Motoren auf demselben Zahnkranz laufen. Um das Drehmoment optimal entfalten lassen zu können, bietet es sich an, mindestens ein Frequenzumrichter (FU) einzusetzen. Die vorgenannte Montage ist aber nur beispielhaft. So kann die Möglichkeit zur Montage von Motoren auf einer Platte frei gewählt werden. Es muss nur mindestens ein Motor mit einem Zahnkranz in Eingriff gehen. Es können beispielsweise auch drei Motoren auf der Montageplatte montiert sein Die Montageplatte kann hierzu auch gedreht werden, sodass - wie beispielsweise in Figur 11 gezeigt - die beiden Motoren 14 und 15 nicht wie abgebildet senkrecht, sondern waagerecht oder in einem anderen, beliebigen Winkel montiert werden können.

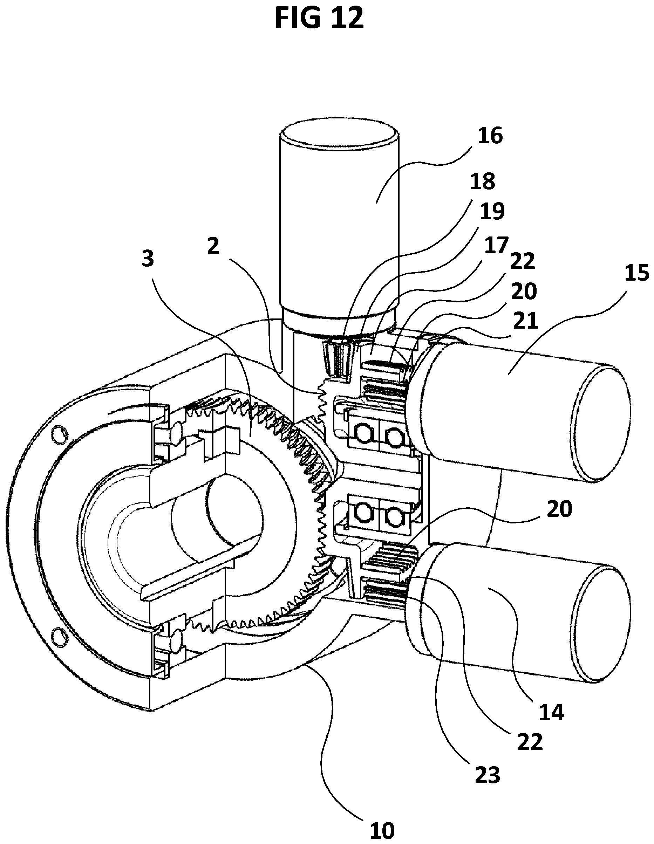

Fig. 12 zeigt einen Teilschnitt des Antriebs aus Fig. 11, wobei an drei Positionen (bekannt aus Fig. 10 und Fig. 11) ein Motor an die Planspirale 2 montiert ist. In Motoraufnahme 11 der Motor 14, der mit seinem Stirnrad 23 in das Planspiralrad 17 in die Frontverzahnung 22 eingreift, in Motoraufnahme 12 der Motor 15, der mit seinem Stirnrad 21 in das Planspiralrad 17 in die Innenverzahnung 20 eingreift, in Motoraufnahme 13 der Motor 16, der mit seinem Stirnrad 18 in das Planspiralrad 17 in die Außenverzahnung 19 eingreift.

Die Frontverzahnung, die Innenverzahnung und die Außenverzahnung sind jeweils unterschiedliche Zusatzverzahnungsabschnitte, der jeweils radial zu einer Drehachse des Zahnrads beabstandet ist und zum Angreifen einer Antriebsverzahnung dient. Durch den Abstand von der Drehachse ergibt sich auch noch ein vorteilhaftes Übersetzungsverhältnis bei der dadurch hervorgerufenen Drehung der Planspirale, die nun mit mehr Kraft als bei einer direkten Drehung über die Drehachse 1 erzeugt worden wäre.

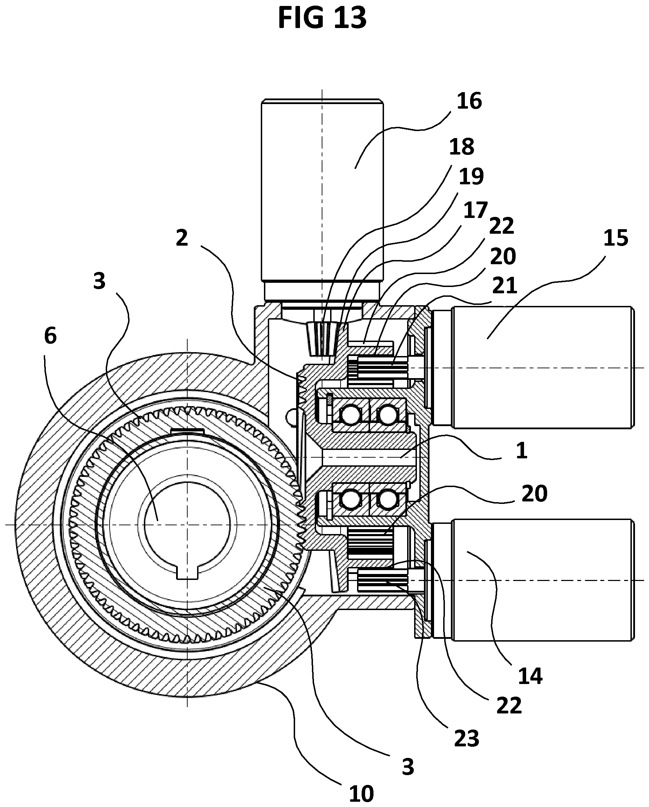

Fig. 13 zeigt eine Schnittansicht aus der man erkennen kann, dass die Planspirale an radial von der spiralförmigen Verzahnung nach außen gerichteten Abschnitten mehrere Zusatzverzahnungsabschnitte aufweist, die mit entsprechenden Wellen von Motoren zusammenwirken, um eine Drehung der Planspirale zu bewirken.

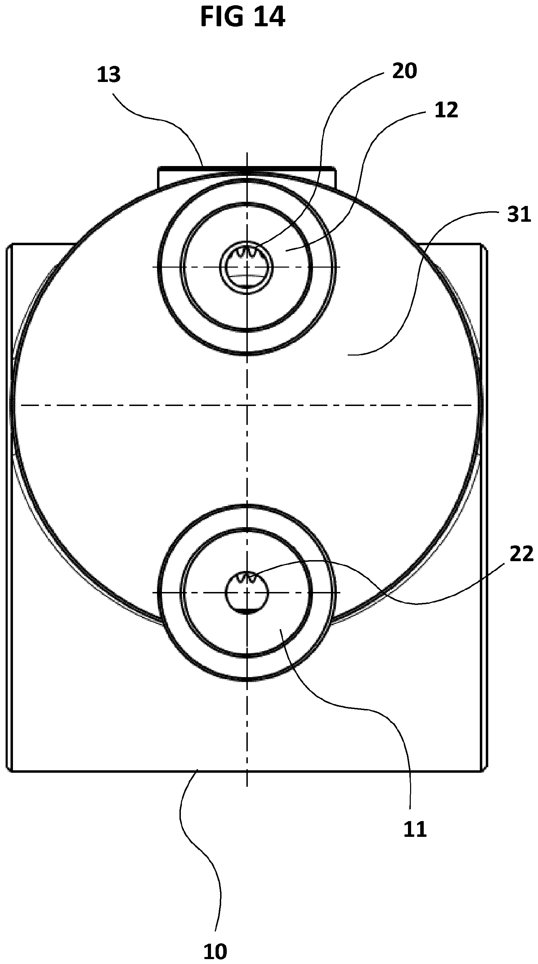

Fig. 14 zeigt noch einmal die Motoraufnahmen 11 und 12 mit der sichtbaren Außenverzahnung 22 für Motor 14 und die Innenverzahnung 20 für Motor 15 im Getriebegehäuse 10. Weiterhin ist die Motoraufnahme 13 für den Motor 16 erkennbar. Durch die Wahl des Motoranschlusses wird die Getriebeübersetzung beeinflusst, da alle Einbauorte unterschiedliche Übersetzungen haben. Somit ergibt sich ein sehr breites Einsatzspektrum, obwohl bspw. nur ein einzelner Motor Verwendung findet.

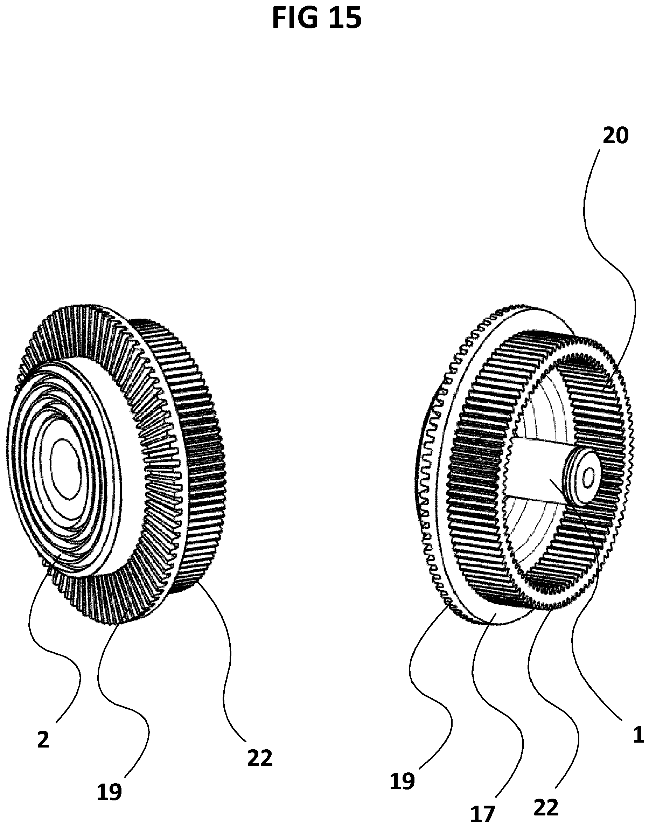

Fig. 15 zeigt eine spezifische Ausgestaltung eines von der Erfindung genutzten Planspiralrads mit mehreren Zusatzverzahnungsabschnitten, nämlich der Frontverzahnung 19 für Motor 16, Innenverzahnung 20 für Motor 15 und Außenverzahnung 22 für Motor 14.

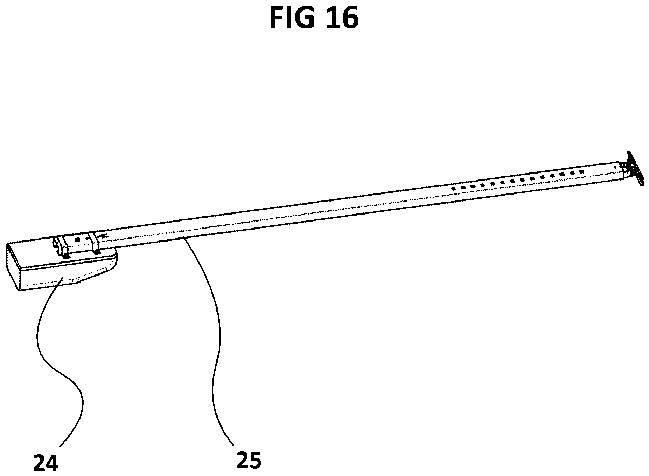

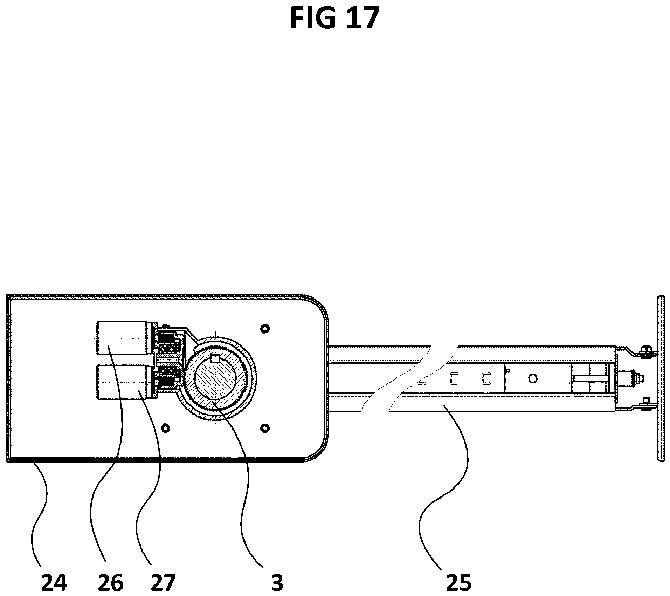

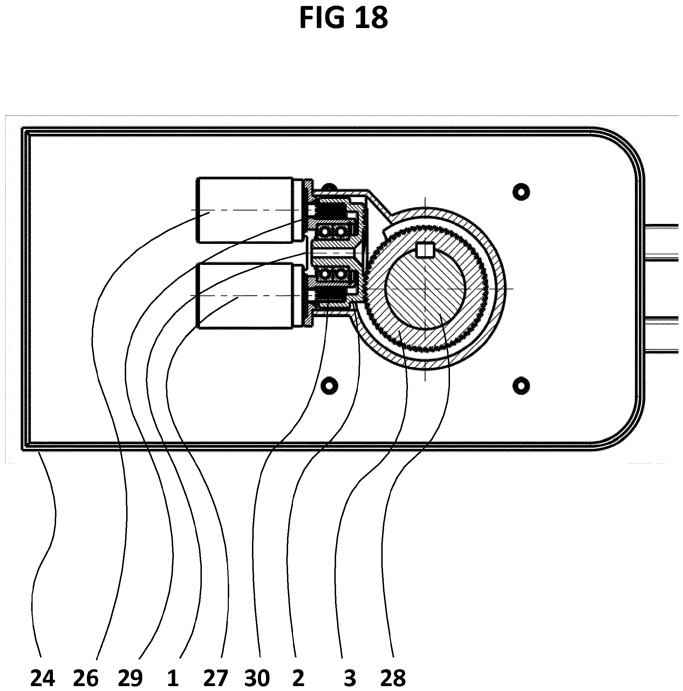

Die Figs. 16 bis 18 zeigen einen exemplarischen Aufbau eines Gargentorantriebs. Diese bestehen aus dem Antriebsgehäuse 24 und der Schiene 25, in dem der nicht dargestellte Schlitten läuft und der wiederum das Garagentor antreibt. Garagentorantriebe sind prinzipbedingt eher flach angeordnet, da sie zwischen dem nach oben schwingenden Garagentor und der Decke montiert werden. Daher ist der in den Figs. 17 und 18 gezeigte Aufbau vorteilhaft.

In Fig. 17 wird der grobe Aufbau des Innenlebens des Antriebsgehäuses 24 mit der daran montierten Schiene 25 gezeigt. Hier ist zu sehen, dass an dem Torusrad 3 über die Planspirale zwei Motoren 26 und 27 montiert sind.

Zum Betrieb ist eigentlich nur ein Motor notwendig, dieser kann - je nach Anwendung- als Motor 26 oder 27 montiert sein. Beim heavy-duty Einsatz oder als Redundanz in kritischen Anwendungen (bspw. in Tiefgaragen) können beide Motoren montiert werden.

In Fig. 18 wird der Aufbau detaillierter illustriert. Hier kann das Stirnrad 29 des Motors 26 sowie das Stirnrad 30 des Motors 27 erkannt werden, welche auf die Planspirale 2 wirken. Die Planspirale 2 greift in das Torusrad 3 ein, welches mit dem Antriebsrad des Zahnriemens 28 verbunden ist.

## Patentansprüche

1. Planspiralgetriebe, insbesondere zur Verwendung in einer Toranlage, umfassend:
ein Zahnrad, insbesondere eine Planspirale, mit einer flächigen Seite, auf der eine Spiralverzahnung mit mindestens einem Zahn angeordnet ist, der einen spiralförmigen Zahnverlauf besitzt, und
ein Zylinderrad, insbesondere ein Torusrad, das an seiner Mantelfläche eine Außenverzahnung aufweist, wobei
die Spiralverzahnung des Zahnrads mit der Außenverzahnung des Zylinderrads in kämmenden Eingriff steht,
**dadurch gekennzeichnet, dass**
das Zahnrad mindestens einen Zusatzverzahnungsabschnitt aufweist, der radial zu einer Drehachse des Zahnrads beabstandet ist und zum Angreifen einer Antriebsverzahnung dient.

2. Planspiralgetriebe nach Anspruch 1, wobei der Zusatzverzahnungsabschnitt eine Zylindermantelform aufweist, deren Achse identisch zur Drehachse des Zahnrads ist und die an ihrer Innen- und/oder Außenseite eine Verzahnung zum Angreifen einer Antriebsverzahnung aufweist.

3. Planspiralgetriebe nach einem der vorhergehenden Ansprüche, wobei der Zusatzverzahnungsabschnitt an einer Seite des Zahnrads angeordnet ist, die zu der flächigen Seite, die die Spiralverzahnung aufweist, gegenüberliegt.

4. Planspiralgetriebe nach einem der vorhergehenden Ansprüche, wobei der Zusatzverzahnungsabschnitt einen radialen Abstand von der Drehachse des Zahnrads aufweist, der größer als der maximale radiale Abstand der Spiralverzahnung von der Drehachse ist.

5. Planspiralgetriebe nach einem der vorhergehenden Ansprüche, wobei der spiralförmige Zahnverlauf der Spiralverzahnung dem Verlauf einer Spirale entspricht, deren Ursprung auf der Drehachse des Zahnrads liegt, wobei vorzugsweise der spiralförmige Zahnverlauf einer Archimedischen Spirale entspricht.

6. Planspiralgetriebe nach einem der vorhergehenden Ansprüche, wobei der Zusatzverzahnungsabschnitt an einer die Spiralverzahnung umgebenden, sich radial nach außen erstreckenden Auskragung angeordnet ist, so dass der Zusatzverzahnungsabschnitt senkrecht zu der Drehachse steht oder mit der Lotrechten auf die Drehachse einen spitzen Winkel einschließt.

7. Planspiralgetriebe nach einem der vorhergehenden Ansprüche, wobei der Zusatzverzahnungsabschnitt an einer Seite des Zahnrads angeordnet ist, die zu der flächigen Seite, die die Spiralverzahnung aufweist, zugewandt ist.

8. Planspiralgetriebe nach einem der vorhergehenden Ansprüche, wobei mehrere Zusatzverzahnungsabschnitte vorgesehen sind, von denen jeder eine Verzahnung zum Angreifen einer Antriebsverzahnung aufweist, vorzugsweise wobei die mehreren Zusatzverzahnungsabschnitte unterschiedliche Übersetzungen im Planspiralgetriebe erzeugen.

9. Planspiralgetriebe nach einem der vorhergehenden Ansprüche, wobei das Zahnrad dazu ausgelegt ist, lediglich über seinen mindestens einen Zusatzverzahnungsabschnitt angetrieben zu werden.

10. Torantriebskomponente umfassend:
ein Planspiralgetriebe nach einem der vorhergehenden Ansprüche, und
ein das Planspiralgetriebe umgebendes Gehäuse, das über mehrere Öffnungen zum Einführen einer Antriebsverzahnung eines Antriebsmotors für ein Zusammenwirken mit einer oder mehreren Verzahnungen des mindestens einen Zusatzverzahnungsabschnitts verfügt.

11. Torantriebskomponente nach Anspruch 10, wobei die mehreren Öffnungen zu verschiedenen Verzahnungen des Zusatzverzahnungsabschnitts und/oder verschiedenen Zusatzverzahnungsabschnitten führen, wobei vorzugsweise
die Öffnungen Bestandteil einer Antriebsmotoraufnahme in dem Gehäuse sind.

12. Torantrieb, insbesondere Garagentorantrieb, umfassend:
ein Planspiralgetriebe nach einem der vorhergehenden Ansprüche 1 bis 9 oder eine Torantriebskomponente nach einem der Ansprüche 10 oder 11, und
mindestens einen Antriebsmotor mit einer Antriebsverzahnung, die mit einer Verzahnung des mindestens einen Zusatzverzahnungsabschnitts kämmt, vorzugsweise indem eine die Antriebsverzahnung antreibende Welle des Antriebsmotors durch eine Öffnung in einem das Planspiralgetriebe umgebenden Gehäuse durchgeführt ist.

13. Torantrieb nach Anspruch 12, wobei mehrere Antriebsmotoren zum Antreiben des Planspiralgetriebes vorgesehen sind, von denen jeder vorzugsweise mit einer anderen Verzahnung des mindestens einen Zusatzverzahnungsabschnitts und/oder mit einem separaten Zusatzverzahnungsabschnitt zusammenwirkt.

14. Verwendung eines Planspiralgetriebes in einem Torantrieb, wobei das Planspiralgetriebe umfasst:
ein Zahnrad, insbesondere eine Planspirale, das eine Verzahnung mit mindestens einem Zahn aufweist, der einen spiralförmigen Zahnverlauf besitzt, und
ein Zylinderrad, insbesondere ein Torusrad, das an seiner Mantelfläche eine Außenverzahnung aufweist, wobei
das Zahnrad mit dem Zylinderrad in kämmenden Eingriff steht.

15. Verwendung eines Planspiralgetriebes in einem Torantrieb nach Anspruch 14, wobei das Planspiralgetriebe nach einem der Ansprüche 1 bis 9 fortgebildet ist und/oder die weiteren Bestandteile nach den Ansprüchen 10 bis 12 umfasst.
